# EUROPEAN PATENT APPLICATION

(11) **EP 4 648 449 A1**
(43) Date of publication of application: **12.11.2025**
(21) Application number: 25173065.1
(22) Date of filing: 29.04.2025
(51) Int. Cl.: H04W 4/90, H04W 4/40, H04H 20/59, H04H 20/08, H04W 4/44, H04W 4/46, H04W 4/02, H04W 4/021, H04H 20/53, H04H 20/55, H04H 20/57, G08G 1/00, G08G 1/09

(54) **METHOD OF TRANSMITTING RADIO DATA, METHOD OF RECEIVING RADIO DATA, AND RADIO DATA PROCESSING DEVICE**

(30) Priority: 10.05.2024 KR 20240061833
(71) Applicant: Hyundai Mobis Co., Ltd., Gangnam-gu Seoul 06141 (KR)
(72) Inventor: LEE, Yong Joon, Yongin-si, Gyeonggi-do 16891 (KR)
(74) Representative: Jung, Minkyu

(57) **Abstract**

According to embodiments, a radio data receiving method includes receiving radio data in a specific frequency band by a vehicle, and displaying information related to the radio data, and in this case, the radio data includes emergency information, the emergency information indicates an event related to a specific location on a road, and the emergency information is received based on a receivable range of the emergency information.

## Description

this application claims the benefit of earlier filing dates and right of priority to Korean Application No.10-2024-0061823, filed on May 10, 2024, the contents of which are hereby incorporated by reference herein in their entirety.

### BACKGROUND OF THE DISCLOSURE

### Field of the Disclosure

Embodiments relate to a method of transmitting radio data, a method of receiving radio data, and a radio data processing device.

### Discussion of the Related Art

A radio data system (RDS) refers to a system that transmits and receives radio data by a frequency modulation (FM) method.

A method of transmitting and receiving traffic information simply for listening to FM radio broadcast has limitations in that the method does not provide information specialized for a vehicle of a driver.

There is a need for a method of transmitting and receiving traffic information specialized for a vehicle of a driver.

Compatibility with FM radio broadcasting and personalized services for drivers are required.

A method of providing data specialized for a vehicle of a driver is needed to efficiently utilize an FM radio broadcast network.

### SUMMARY OF THE DISCLOSURE

Embodiments provide a method and device for transmitting and receiving radio data specialized for vehicles and roads.

Embodiments provide a method and device for transmitting and receiving emergency information compatible with a radio broadcasting system.

However, the scope of the embodiments is not limited to the technical objects described above, and the scope of the embodiments may be expanded to other technical objects to be inferred by those of skill in the art based on the entire described content.

According to embodiments, a radio data receiving method includes receiving radio data in a specific frequency band by a vehicle, and displaying information related to the radio data, and in this case, the radio data includes emergency information, the emergency information indicates an event related to a specific location on a road, and the emergency information is received based on a receivable range of the emergency information.

### BRIEF DESCRIPTION OF THE DRAWINGS

The drawings are provided to further understand the embodiments and illustrate embodiments together with the description related to the embodiments. For further understanding of the various embodiments described below, reference needs to be made to the following description of the embodiments in conjunction with the following drawings, in which like reference numerals refer to corresponding parts throughout the drawings.
FIG. 1 illustrates an edge service according to embodiments.
FIG. 2 shows an edge frequency of an edge service according to embodiments.
FIG. 3 illustrates a fixed edge service according to embodiments.
FIG. 4 shows an emergency status for an edge service according to embodiments.
FIG. 5 shows information indicating an emergency status for an edge service according to embodiments.
FIG. 6 illustrates a mobile edge service according to embodiments.
FIG. 7 shows information indicating an emergency status for a mobile edge service according to embodiments.
FIG. 8 shows information about an emergency vehicle of a mobile edge service according to embodiments.
FIG. 9 illustrates an edge service for a vehicle accident according to embodiments.
FIG. 10 illustrates a method of transmitting and receiving radio data according to embodiments.
FIG. 11 illustrates a radio data processing device according to embodiments.

### DETAILED DESCRIPTION OF THE DISCLOSURE

Reference will now be made in detail to the embodiments of the present disclosure with reference to the accompanying drawings. The detailed description, which will be given below with reference to the accompanying drawings, is intended to explain embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Most of the terms used in the embodiments are selected from those commonly used in the field, but some terms are arbitrarily selected by the applicant and their meanings are described in detail in the following description as necessary. Therefore, the examples need to be understood based on the intended meaning of the terms and not simply the names or meanings of the terms.

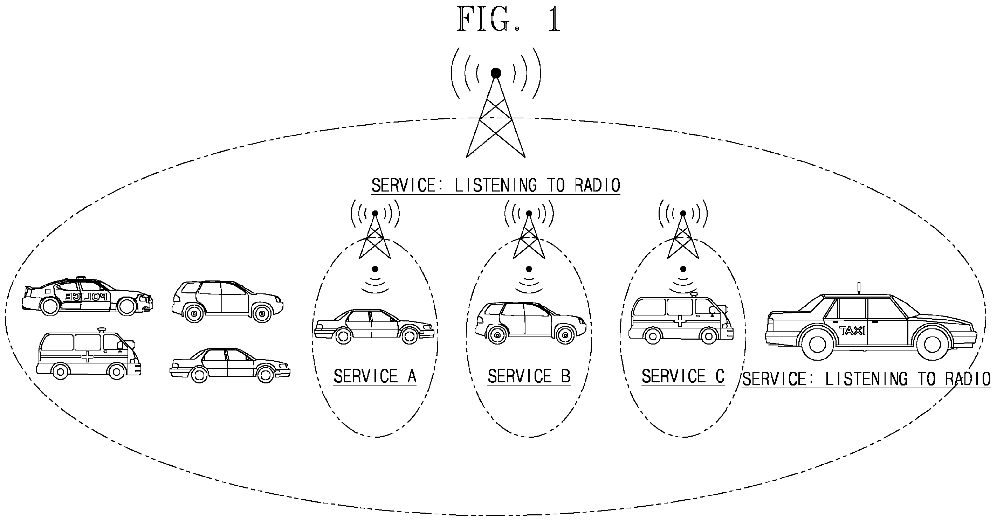

FIG. 1 illustrates an edge service according to embodiments.

The edge service according to embodiments may mean a service that transmits and receives radio data in a frequency modulation (FM) broadcasting network. Through the edge service according to embodiments, a user may listen to radio broadcast. A user and/or a vehicle that belong to a service network may receive a radio service.

A radio data transmitting method, a radio data receiving method, and a radio data processing device according to embodiments may transmit and receive traffic information specialized for each driver and/or vehicle. For example, vehicle A may receive service A from a base station, vehicle B may receive service B from the base station, and vehicle C may receive service C from the base station. The radio data transmitting method, the radio data receiving method, and the radio data processing device according to embodiments may provide a broadcasting network for transmitting and receiving traffic information specialized for a vehicle of a driver. In addition to traffic information specialized for each vehicle, a traffic information edge service may be compatible with a service for radio listening.

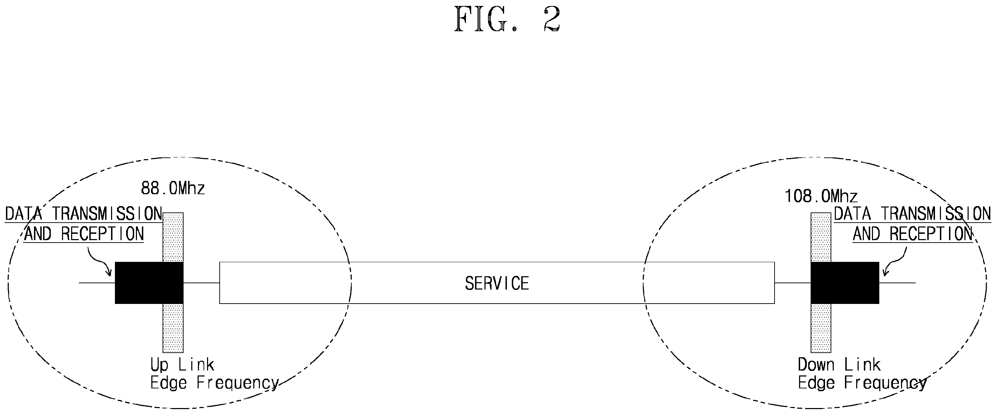

FIG. 2 shows an edge frequency of an edge service according to embodiments.

The edge service according to embodiments (FIG. 1) may be provided based on a specific frequency band, as shown in FIG. 2. A specific frequency for the edge service according to embodiments may be referred to as an edge frequency. The radio data transmitting method, the radio data receiving method, and the radio data processing device according to embodiments may always transmit and receive narrowband radio data system (RDS) data based on the edge frequency.

An uplink edge frequency may include, for example, 88.0 MHz, and a downlink edge frequency may include, for example, 108.0 MHz.

An edge frequency-based edge service may be compatible with the existing FM broadcast while minimizing the impact on the existing FM terminal. By adjusting transmission power for the edge service, radio broadcast may be received in a specific region and/or area. That is, the service may be personalized. The serviced may also maximize FM network data broadcasting to provide vehicle-specific specifications.

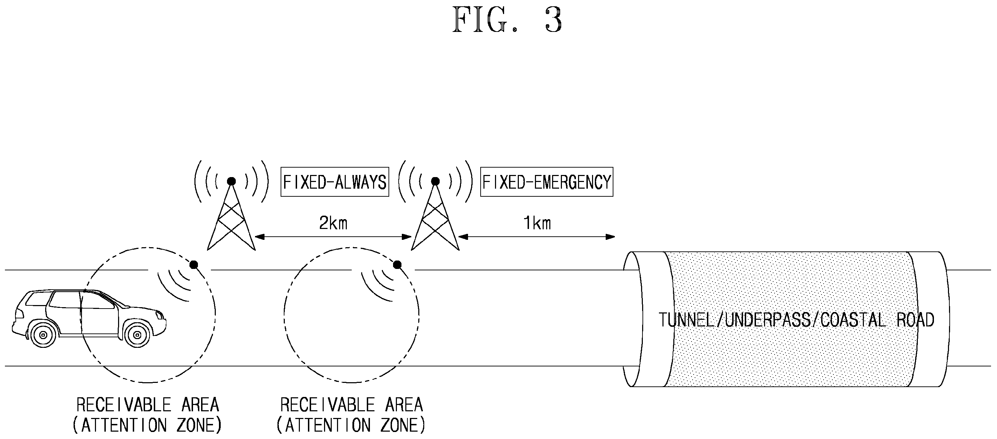

FIG. 3 illustrates a fixed edge service according to embodiments.

A type of an edge service according to the embodiments include a fixed type edge service. The fixed edge service transmits data always within a fixed area and/or range.

For example, as in FIG. 3, when there are specific geographical features such as tunnels, underpasses, and coastal roads, it may be necessary to transmit radio broadcast targeting vehicles approaching these facilities.

Like traffic signs, the service may provide a driver with warning information about a tunnel and an underpass on a road, or provide the driver with information about hazards such as falling a rock on the road or flooded road.

To more efficiently provide these risk and warning information functions, the edge service according to embodiments may provide driver warning and notification functions about emergency and/or disaster statuses. The service may provide traffic information specialized for a surrounding area of a tunnel, an underpass or a coastal road.

For example, when a vehicle approaches a certain area within a certain distance (e.g., 3 km) of a specific facility or terrain, the corresponding vehicle is positioned in an area in which the vehicle is capable of receiving the edge service. The edge service may transmit information to a driver of a vehicle within an area to notify the driver of emergency and/or disaster statuses via an edge frequency. When the vehicle gets closer to a tunnel, an underpass, or a coastal road, for example, when the vehicle moves 1 km forward, information may be provided to the vehicle within a proximity area to notify the driver of emergency and/or disaster statuses. That is, the edge service may be provided to the vehicle within an edge service area and may be referred to as a fixed edge service. Constant warning/alert information may be transmitted to the vehicle based on a distance, or emergency warning/alert information may be transmitted to the vehicle based on a distance. Therefore, the vehicle and the driver of the vehicle may receive the fixed edge service always or selectively in emergency cases depending on a risk area and a distance and area between vehicles. There is an effect of providing a driver with personalized traffic information more efficiently than traffic signs or existing broadcast networks.

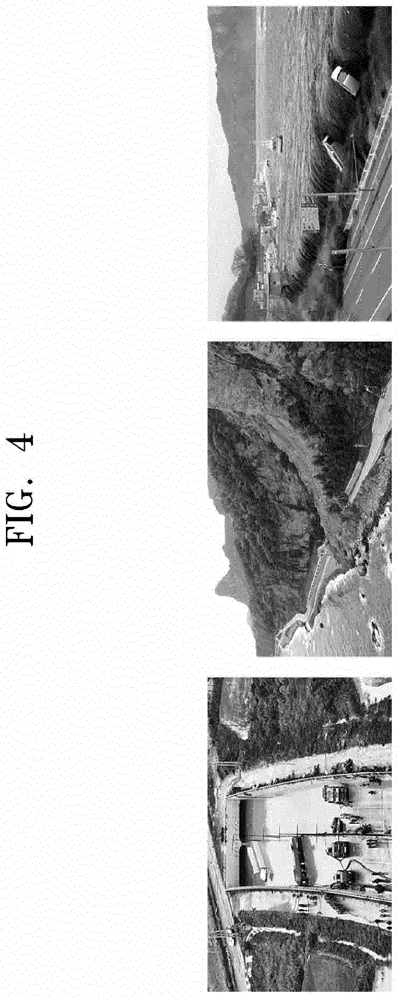

FIG. 4 shows an emergency status for an edge service according to embodiments.

Examples of a tunnel, an underpass, and a coastal road related to an emergency status, as shown in FIG. 3, are shown in FIG. 4. In the event of flooding in a tunnel, rockslides on a coastal road, or tsunamis, an edge service may be provided to notify a driver of an emergency status, as shown in FIG. 3. The emergency status is not limited to the examples in FIG. 4, but include any situation in which emergency information is needed.

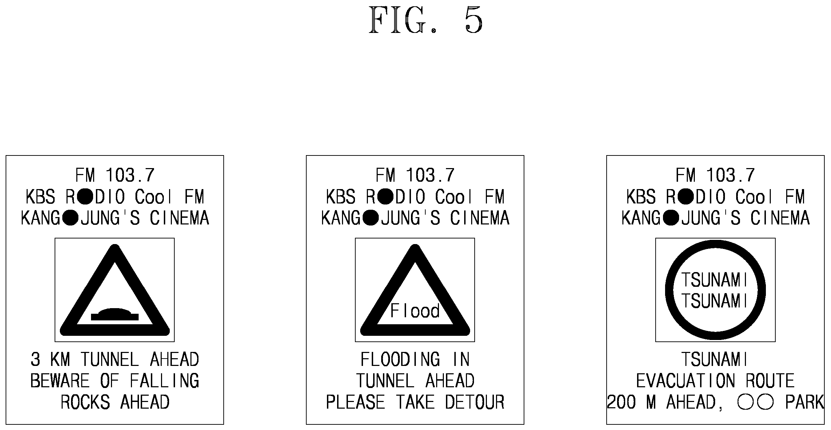

FIG. 5 shows information indicating an emergency status for an edge service according to embodiments.

As shown in FIGS. 3 and 4, when an emergency status occurs, FIG. 5 shows emergency status notification information provided to the driver. The edge service may provide vehicle/driver/region-specific radio data along with a radio broadcasting service, such as radio listening, as shown in FIG. 1. Accordingly, as shown in FIG. 5, the edge service may provide UI/UX information and/or voice signals indicating forward tunnel guidance, forward rockfall warning guidance, forward tunnel flooding guidance, and tsunami evacuation guidance along with UI/UX information related to radio broadcasting.

The radio data transmitting method, the radio data receiving method, and the radio data processing device may transmit and receive information about a hazard/emergency status. A display device of a vehicle may display information about a hazard/emergency status on a screen based on the received information. This allows the driver to drive safely.

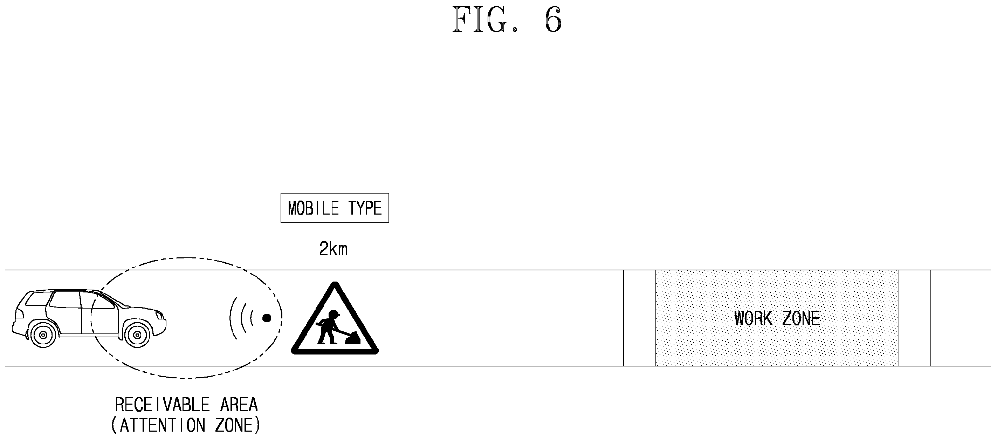

FIG. 6 illustrates a mobile edge service according to embodiments.

FIG. 6 shows an example of a mobile edge service compared to FIG. 5. When FIG. 5 shows an example of an edge service transmitting and receiving information with a fixed location, for example, emergency information related to a road or tunnel at a specific location, which is a fixed event, FIG. 6 shows an example of an edge service transmitting and receiving emergency information about a mobile event with an unfixed location (which is referred to as a mobile event or temporary event).

The mobile event may include a road work. A work zone and location may change depending on a working time, and thus this may be referred to as a mobile event.

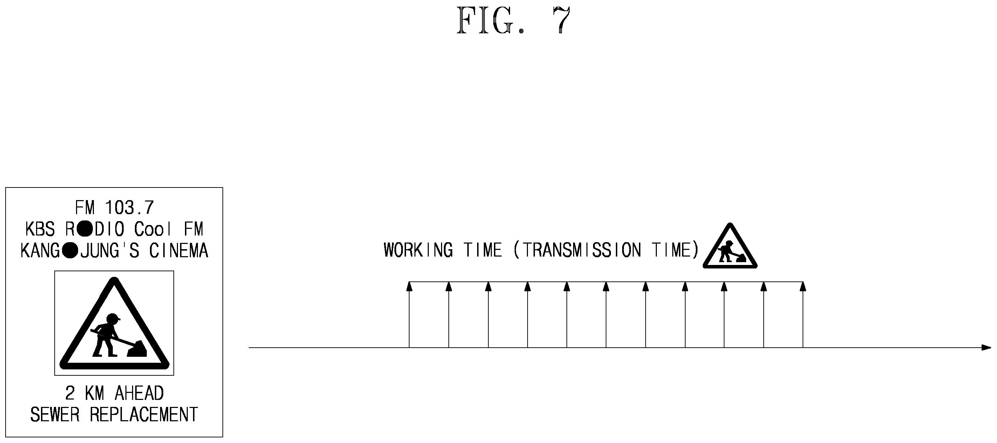

From a point 2 km prior to a construction or work zone, the radio data transmitting method, the radio data receiving method, and the radio data processing device may transmit and receive emergency or disaster notification information about an event to a driver. The radio data transmitting method may include determining that the driver is in a receivable area when the driver is in a driving attention zone and transmitting emergency information to the driver based on a radio data system, and the radio data transmitting method may include receiving the emergency information and displaying the emergency information to the driver as shown in FIG. 7.

FIG. 7 shows information indicating an emergency status for a mobile edge service according to embodiments.

A mobile event such as a work may have a variable location and/or time. Therefore, the radio data transmitting method may include setting a time for transmitting radio data according to a working time. For example, emergency information may be transmitted during a road working time. The emergency information may include details of a road work, location/distance information of a work zone, and a working time.

The radio data receiving method may include, after receiving radio data, displaying the emergency information on a display together with radio listening information. When the driver is not in the driving attention zone, emergency information may not be displayed, but when the driver is in the driving attention zone, the emergency information may be displayed. The driver may obtain real-time information about a road status, such as construction.

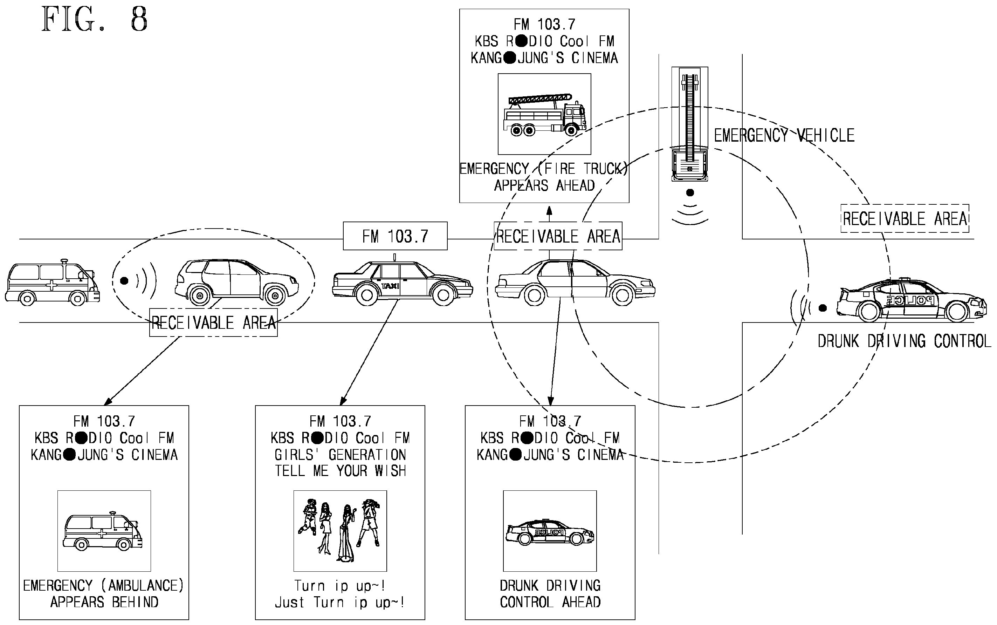

FIG. 8 shows information about an emergency vehicle of a mobile edge service according to embodiments.

FIG. 8 shows a mobile event of an edge service and shows a mobile emergency vehicle service. An emergency vehicle, such as a fire truck, an ambulance, or a police car, may perform an emergency event such as emergency dispatch or drunk driving control. The emergency vehicle may transmit radio data including emergency information to surrounding vehicles based on a radio broadcasting system, and vehicles within a receivable area may receive the radio data including the emergency information.

The edge service of FIG. 8 may be performed between vehicles. The edge service may include an edge service between an emergency vehicle and a vehicle within a range of emergency vehicles, as well as an edge service between a vehicle within the range of emergency vehicles and a vehicle not within the range of emergency vehicles.

There may be a vehicle that receives emergency information, such as forward dispatch ambulance guidance information and/or drunk driving control guidance information, from an emergency vehicle within a radio data transmission/reception range (area) of the emergency vehicle, and a vehicle that is located behind or adjacent to the vehicle that receives the emergency information but is not within the radio data transmission/reception range of the emergency vehicle may receive emergency information from the vehicle that receives the emergency information.

A vehicle positioned in front of the emergency vehicle may receive radio data containing notification information from the emergency vehicle. When there are a plurality of vehicles in which drivers listen to radio broadcast on 103.7 MHz, there may be a vehicle at each vehicle location that receives emergency information and provides the emergency information to the driver.

The driver may recognize an emergency vehicle more efficiently and quickly while driving using a radio data system.

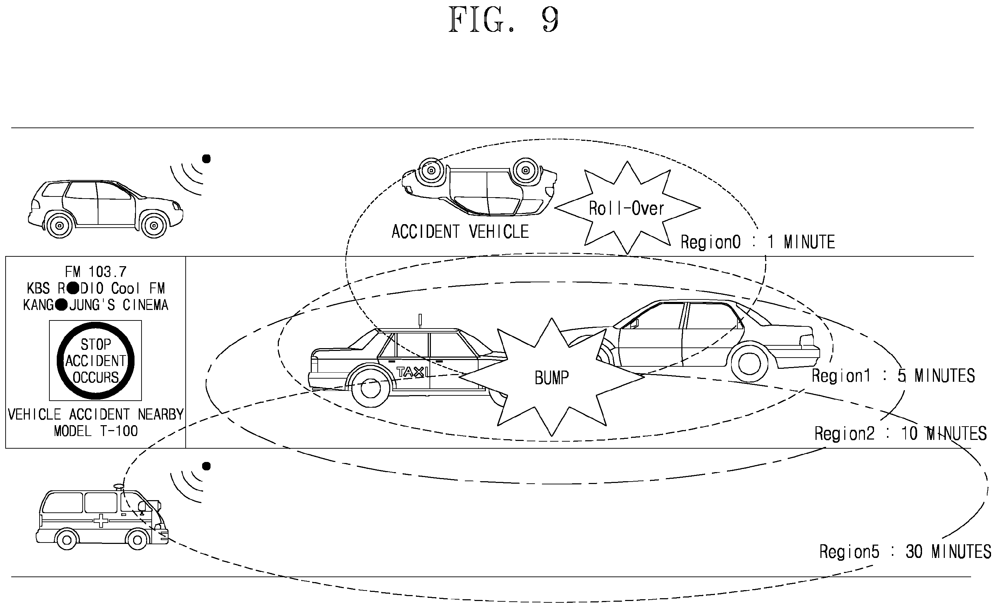

FIG. 9 illustrates an edge service for a vehicle accident according to embodiments.

As shown in FIG. 9, the edge service may transmit and receive radio data indicating a vehicle accident. For example, when a vehicle overturns due to a collision on a road, it causes a problem for other vehicles to use that road. To transmit emergency information to surrounding vehicles on the road, radio data may be transmitted within a range of an area in which the accident occurs. A range of radio data transmission may be expanded over time. For example, radio data containing emergency information may be transmitted for 1 minute in the immediate vicinity of the accident, radio data containing emergency information may be transmitted for 5 minutes in the immediate vicinity of the accident, radio data containing emergency information may be transmitted for 10 minutes in the vicinity of the accident, and radio data containing emergency information may be transmitted for 30 minutes in a broader area of the accident. A transmission area may be expanded over a period of time to adaptively adjust a range of the receivable area. Depending on a type and severity of the accident, emergency information may be efficiently transmitted to surrounding vehicles by expanding or reducing a receivable range. A vehicle related to an accident may transmit emergency guidance information related to the accident to vehicles within a reception range via their own radio data system.

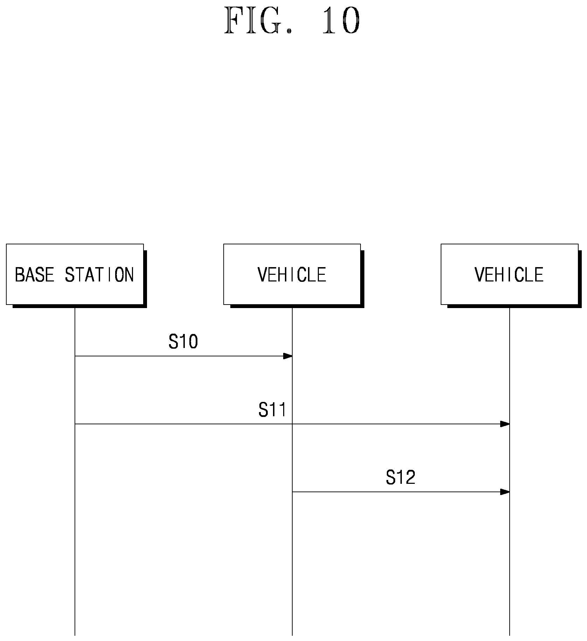

FIG. 10 illustrates a method of transmitting and receiving radio data according to embodiments.

The radio data transmitting and receiving method according to embodiments may be performed by the operations described in FIGS. 1 to 9 using the following flowchart.

The radio data transmitting method by a base station may include transmitting emergency information to vehicles within a receivable area range of emergency information of a radio broadcasting system (S10 and S11).

Depending on the location of the vehicle, the emergency information (S10) received by a first vehicle and the emergency information (S11) received by a second vehicle may be the same or different. For example, in FIGS. 3 to 5, in the case of a fixed edge service, the emergency information received by the first vehicle when the first vehicle is closer to an accident point and within a range of an emergency status may be different from the emergency information received by the second vehicle when the second vehicle is further from the accident point and within a range of a normal status. When both the first vehicle and the second vehicle belong to the same area, either a normal status range or an emergency status range, the emergency information received by the first vehicle and the second vehicle may be the same. As shown in FIGS. 6 and 7, in the case of a mobile (temporary) edge service, the content of information indicating an emergency status may vary depending on the location and time of the first and second vehicles. As shown in FIG. 8, in the case of a mobile emergency vehicle recognition edge service, the emergency information received by the first and second vehicles may vary depending on distances between the first and second vehicles and the emergency vehicle.

The radio data receiving method by a vehicle may include transmitting emergency information from vehicle to vehicle (S12). As shown in FIG. 9, in the case of a vehicle accident edge service, radio data may be transmitted from the first vehicle to the second vehicle depending on the distance and time between the first vehicle and the second vehicle approaching the first vehicle related to the accident location.

Referring to FIG. 10, the radio data receiving method may include receiving radio data in a specific frequency band by a vehicle, and displaying information related to the radio data, and in this case, the radio data may include emergency information, the emergency information may indicate an event related to a specific location on a road, and the emergency information may be received based on a receivable range of the emergency information.

Referring to FIGS. 3, 4, and 5, with respect to a fixed edge service, the radio data may be received from a base station, the receivable range includes a first range and a second range generated based on a distance to a specific location, the emergency information within the first range may include general status information about an event, and the emergency information within the second range may include emergency status information about the event.

Referring to FIGS. 6 and 7, with respect to a mobile edge service, an event about a specific location on a road may change over time, the emergency information may include a time required for the event, and the emergency information may be received during the required time based on the receivable range.

Referring to FIG. 8, with respect to a mobile emergency vehicle, radio data is received from an emergency vehicle, a receivable range is generated based on a location of the emergency vehicle, and emergency information within the receivable range may include information about an event of the emergency vehicle.

Referring to FIG. 9, In relation to a vehicle accident edge service, radio data may be received from an accident vehicle, a receivable range may be generated based on the location of the accident vehicle, emergency information within the receivable range may include information about an event of the accident vehicle, and the receivable range may be expanded over time.

Referring to FIGS. 3, 4, and 5, with respect to emergency information of a fixed edge service, general status information may include at least one of description information or location information about an event, and emergency status information may include emergency warning information about an event.

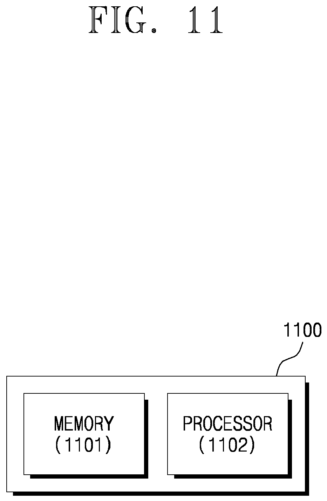

FIG. 11 illustrates a radio data processing device according to embodiments.

The radio data processing device of FIG. 11 performs a radio data transmission and reception method of FIG. 10. The radio data processing device may transmit radio data from a base station or transmit and receive the radio data from a vehicle.

A radio data processing device 110 (or a radio data receiving device) may include a memory 1101, and a processor 1102 configured to execute one or more instructions in the memory, and in this case, the processor may be configured to perform receiving radio data in a specific frequency band, and displaying information related to the radio data, the radio data may include emergency information, the emergency information may indicate an event related to a specific location on a road, and the emergency information may be received based on a receivable range of the emergency information.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor.

The method and device according to embodiments may efficiently inform a driver of a vehicle of emergency information specialized for a vehicle and/or a road environment based on a radio broadcasting system.

The method and device according to embodiments may accurately and quickly provide an emergency event about a vehicle and/or road to vehicles in a surrounding area.

## Claims

1. A radio data receiving method comprising:
receiving radio data in a specific frequency band by a vehicle; and
displaying information related to the radio data,
wherein the radio data includes emergency information,
wherein the emergency information indicates an event about a location on a road, and
wherein the emergency information is received based on a receivable range of the emergency information.

2. The radio data receiving method of claim 1,
wherein the radio data is received from a base station,
wherein the receivable range includes a first range and a second range generated based on a distance to the location,
wherein the emergency information within the first range includes general status information about the event, and
wherein the emergency information within the second range includes emergency status information about the event.

3. The radio data receiving method of claim 1 or 2,
wherein the event about the location on the road changes over time,
wherein the emergency information includes a required time of the event, and
wherein the emergency information is received during the required time based on the receivable range.

4. The radio data receiving method of any one of claims 1 to 3,
wherein the radio data is received from an emergency vehicle,
wherein the receivable range is generated based on a location of the emergency vehicle, and
wherein the emergency information within the receivable range includes information about an event of the emergency vehicle.

5. The radio data receiving method of any one of claims 1 to 4,
wherein the radio data is received from an accident vehicle,
wherein the receivable range is generated based on a location of the accident vehicle,
wherein the emergency information within the receivable range includes information about an event of the accident vehicle, and
wherein the receivable range expands over time.

6. The radio data receiving method of any one of claims 2 to 5,
wherein the general status information includes at least one of description information or location information about the event, and
wherein the emergency status information includes emergency warning information about the event.

7. A radio data receiving method comprising:
transmitting, by a base station, emergency information to vehicles within a receivable area range of emergency information of a radio broadcasting system;
receiving radio data in a specific frequency band by the vehicles, and displaying information related to the radio data; and
transmitting the emergency information between the vehicles.

8. The radio data receiving method of claim 7, further including:
wherein the radio data includes the emergency information,
wherein the emergency information indicates an event about a location on a road, and
wherein the emergency information is received based on a receivable range of the emergency information.

9. The radio data receiving method of claim 8,
wherein the receivable range includes a first range and a second range generated based on a distance to the location,
wherein the emergency information within the first range includes general status information about the event, and
wherein the emergency information within the second range includes emergency status information about the event.

10. The radio data receiving method of claim 8 or 9,
wherein the event about the location on the road changes over time,
wherein the emergency information includes a required time of the event, and
wherein the emergency information is received during the required time based on the receivable range.

11. The radio data receiving method of any one of claims 8 to 10,
wherein the radio data is received from an emergency vehicle,
wherein the receivable range is generated based on a location of the emergency vehicle, and
wherein the emergency information within the receivable range includes information about an event of the emergency vehicle.

12. The radio data receiving method of any one of claims 8 to 11,
wherein the radio data is received from an accident vehicle,
wherein the receivable range is generated based on a location of the accident vehicle,
wherein the emergency information within the receivable range includes information about an event of the accident vehicle, and
wherein the receivable range expands over time.

13. The radio data receiving method of any one of claims 9 to 12,
wherein the general status information includes at least one of description information or location information about the event, and
wherein the emergency status information includes emergency warning information about the event.

14. A radio data receiving apparatus comprising:
a memory; and
a processor operatively connected to the memory and configured to execute one or more instructions in the memory,
wherein the processor is configured to receive radio data in a specific frequency band, and display information related to the radio data,
wherein the radio data includes emergency information,
wherein the emergency information indicates an event about a location on a road, and
wherein the emergency information is received based on a receivable range of the emergency information.

15. The radio data receiving apparatus of claim 14,
wherein the radio data is received from a base station,
wherein the receivable range includes a first range and a second range generated based on a distance to the location,
wherein the emergency information within the first range includes general status information about the event, and
wherein the emergency information within the second range includes emergency status information about the event.
